# NEUE EUROPÄISCHE PATENTSCHRIFT

(11) **EP 2 630 023 B2**
(45) Veröffentlichungstag und Bekanntmachung des Hinweises auf die Entscheidung über den Einspruch: **21.02.2018**
(45) Hinweis auf die Patenterteilung: 14.05.2014
(21) Anmeldenummer: 11784936.4
(22) Anmeldetag: 13.10.2011
(51) Int. Cl.: B62D 5/00, B62D 6/00

(54) **VERFAHREN ZUM BETREIBEN EINER ELEKTRISCHEN LENKUNG EINES FLURFÖRDERZEUGS UND HIERFÜR VORGESEHENES FLURFÖRDERZEUG**
METHOD FOR OPERATING AN ELECTRIC STEERING SYSTEM OF AN INDUSTRIAL TRUCK AND INDUSTRIAL TRUCK PROVIDED FOR THIS PURPOSE
PROCÉDÉ DE FONCTIONNEMENT D'UNE DIRECTION ÉLECTRIQUE D'UN CHARIOT DE MANUTENTION ET CHARIOT DE MANUTENTION PRÉVU POUR LE PROCÉDÉ

(30) Priorität: 18.10.2010 DE 102010048958
(43) Veröffentlichungstag der Anmeldung: 28.08.2013
(73) Patentinhaber: Jungheinrich Aktiengesellschaft, 22047 Hamburg (DE)
(72) Erfinder: HERSCHEL, Jan, 23843 Bad Oldesloe (DE); LANGLOTZ, Martin, 25365 Sparrieshoop (DE)
(74) Vertreter: Hauck Patentanwaltspartnerschaft mbB
(86) Internationale Anmeldenummer: PCT/EP2011/005133
(87) Internationale Veröffentlichungsnummer: WO 2012/052132

(56) Entgegenhaltungen:
- EP-A2- 1 281 598
- EP-A2- 1 310 419
- EP-A2- 1 964 752
- EP-B1- 1 281 598
- DE-A1- 10 155 441
- DE-A1- 19 625 350
- DE-A1-102005 047 958

## Beschreibung

Die Erfindung betrifft ein Verfahren zum Betreiben einer elektrischen Lenkung eines Flurförderzeugs, das ein Lenkrad und mindestens ein gelenktes Rad aufweist, wobei eine Zuordnung existiert, die jeder Drehstellung des mindestens einen gelenkten Rads einen Sollwert für eine Drehstellung des Lenkrads zuordnet. Bei dem Verfahren wird eine Drehbewegung des Lenkrads des Flurförderzeugs erfasst und ein elektrischer Lenkantrieb für das mindestens eine gelenkte Rad wird derart angesteuert, dass die erfasste Drehbewegung des Lenkrads nach Maßgabe eines vorgegebenen Übersetzungsfaktors in eine Drehbewegung des mindestens einen gelenkten Rads umgesetzt wird. Die Erfindung betrifft auch ein zur Ausführung des Verfahrens bestimmtes Flurförderzeug.

Bei Flurförderzeugen mit einem Lenkrad und einem elektrischen Lenkantrieb gibt es keine unmittelbare mechanische Verbindung zwischen Lenkrad und gelenktem Rad. Dennoch ist eine feste Zuordnung zwischen der Drehstellung des gelenkten Rads und der Drehstellung des Lenkrads erwünscht, insbesondere um beispielsweise bei Geradeausfahrt stets eine bevorzugte Stellung des Lenkrads zu ermöglichen. Mit der Drehstellung des gelenkten Rads ist jetzt und im Folgenden stets die für die Fahrtrichtung maßgebliche Winkelstellung gemeint, die auch als Lenkwinkel bezeichnet wird.

Aus der Druckschrift EP 1 310 419 A2 sind unterschiedliche Verfahren zur Ausrichtung eines Lenkwinkelgebers für eine elektrische Lenkung eines Flurförderzeugs bekannt geworden. Bei den bekannten Verfahren wird zwischen einer Ausrichtphase und einer Betriebsphase des Flurförderzeugs unterschieden. Die Ausrichtphase wird beim Neustart des Flurförderzeugs eingeleitet. In der Ausrichtphase werden Ist-Stellungen eines Lenkwinkelgebers und des gelenkten Rads erfasst. Der Lenkwinkelgeber wird, ohne dass das gelenkte Rad angesteuert wird, solange verstellt, bis festgestellt wird, dass bei Annahme eines vorbestimmten Übersetzungsverhältnisses eine Referenzstellung des Lenkwinkelgebers zu einer Referenzstellung des gelenkten Rads führt. Dann wird in die Betriebsphase umgeschaltet, in der eine Ansteuerung des gelenkten Rads stattfindet. In einer Variante des bekannten Verfahrens werden in der Ausrichtphase die Räder gemäß einem ersten Übersetzungsverhältnis angesteuert, bis festgestellt wird, dass die Referenzstellung des Lenkwinkelgebers bei einem bestimmten Übersetzungsverhältnis zu der vorbestimmten Stellung der gelenkten Räder führt, und dann wird in die Betriebsphase umgeschaltet, die das bestimmte Übersetzungsverhältnis verwendet.

Aus der Druckschrift EP 1 281 598 A2 ist ein Verfahren zum Betreiben einer elektrischen Lenkung eines Flurförderzeugs mit den Merkmalen des Oberbegriffs des Anspruchs 1 bekannt geworden.

Davon ausgehend ist es die Aufgabe der Erfindung, ein Verfahren zum Betreiben einer elektrischen Lenkung eines Flurförderzeugs zur Verfügung zu stellen, das eine bevorzugte Drehstellung des Lenkrads bei bestimmten Lenkwinkeln auch während des laufenden Betriebs des Flurförderzeugs sicherstellt und von einem Fahrer weitgehend unbemerkt ausgeführt werden kann, sowie ein Flurförderzeug zur Ausführung des Verfahrens.

Diese Aufgabe wird gelöst durch das Verfahren mit Merkmalen des Anspruchs 1. Vorteilhafte Ausgestaltungen sind in den sich anschließenden Unteransprüchen angegeben.

Das Verfahren dient zum Betreiben einer elektrischen Lenkung eines Flurförderzeugs, das ein Lenkrad und mindestens ein gelenktes Rad aufweist, wobei eine Zuordnung existiert, die jeder Drehstellung des mindestens einen gelenkten Rads einen Sollwert für eine Drehstellung des Lenkrads zuordnet. Es weist die folgenden Schritte auf:
- Erfassen einer Drehbewegung des Lenkrads des Flurförderzeugs,
- Ansteuern eines elektrischen Lenkantriebsmotors für das mindestens eine gelenkte Rad derart, dass die erfasste Drehbewegung des Lenkrads nach Maßgabe eines vorgegebenen Übersetzungsfaktors in eine Drehbewegung des mindestens einen gelenkten Rads umgesetzt wird,
- Erfassen eines Absolutwerts einer Drehstellung des Lenkrads während der Fahrt des Flurförderzeugs,
- Erfassen eines Absolutwerts einer Drehstellung des gelenkten Rads während der Fahrt des Flurförderzeugs,
- Prüfen, ob die erfassten Absolutwerte entsprechend der Zuordnung miteinander in Beziehung stehen, und, falls hierbei eine Abweichung festgestellt wird,
- Vorgeben eines von dem vorgegebenen Übersetzungsfaktor abweichenden Übersetzungsfaktors für die Umsetzung der erfassten Drehbewegung des Lenkrads in die Drehbewegung des mindestens einen gelenkten Rads derart, dass bei einer weiteren Lenkbewegung der festgestellten Abweichung automatisch entgegengewirkt wird.

Dass eine Zuordnung existiert, die jeder Drehstellung des mindestens einen gelenkten Rads einen Sollwert für eine Drehstellung des Lenkrads zuordnet, bedeutet, dass jedem Lenkwinkel eine bestimmte erwünschte Drehstellung des Lenkrads entspricht. Es können mehrere Lenkradumdrehungen zum Durchfahren des gesamten Lenkwinkelbereichs erforderlich sein, so dass einer bestimmten Drehstellung des Lenkrads unter Umständen mehrere Lenkwinkel zugeordnet sind. Die Zuordnung kann in Form einer mathematischen Funktion existieren, beispielsweise enthaltend einen Referenzwinkel für die Drehstellung des Lenkrads bei einer Nulllage der Drehstellung des gelenkten Rads und ein Übersetzungsverhältnis. Beispielsweise kann einem Lenkwinkel von 0° entsprechend einer Geradeausfahrt eine Drehstellung des Lenkrads von 0° zugeordnet sein, und ein Übersetzungsfaktor beispielsweise in Höhe von 5,5 kann vorschreiben, dass einer Änderung des Lenkwinkels um 1° eine Änderung der Drehstellung des Lenkrads um 5,5° entsprechen soll. Alternativ kann die Zuordnung auf Grundlage einer Tabelle erfolgen.

Das Erfassen der Drehbewegung des Lenkrads kann von einem geeigneten Sensor bewerkstelligt werden, beispielsweise von einem Inkrementalgeber. Mit dem Erfassen einer Drehbewegung ist gemeint, dass eine Änderung der Drehstellung erfasst wird. Es kann lediglich eine relative Änderung erfasst werden, unabhängig von einem Absolutwert der Drehstellung. Die relative Änderung der Drehstellung wird quantitativ erfasst, einschließlich der Drehrichtung.

Das Ansteuern des elektrischen Lenkantriebs erfolgt mit Hilfe einer geeigneten elektronischen Steuerung. Diese steuert den elektrischen Lenkantrieb so an, dass eine erfasste Drehbewegung des Lenkrads in eine entsprechend dem Übersetzungsverhältnis größere oder kleinere Drehbewegung des gelenkten Rads umgesetzt wird. Hierzu kann die Drehbewegung des gelenkten Rads von einem geeigneten Sensor erfasst werden und der Lenkantrieb kann solange angesteuert werden, bis die erfasste Änderung des Lenkwinkels den gewünschten Wert erreicht hat. Alternativ kann der Lenkantrieb unabhängig von einer Erfassung der tatsächlich ausgeführten Drehbewegung angesteuert werden.

Bei der Erfindung werden zusätzlich Absolutwerte einer Drehstellung des Lenkrads und einer Drehstellung des gelenkten Rades während der Fahrt des Flurförderzeugs erfasst. Es wird überprüft, ob die erfassten Absolutwerte entsprechend der Zuordnung miteinander in Beziehung stehen. Das heißt, auf Grundlage der erfassten Absolutwerte wird festgestellt, ob die erwünschte Zuordnung von den tatsächlichen Werten eingehalten wird oder nicht.

Falls eine Abweichung festgestellt wird, wird für die Umsetzung der erfassten Drehbewegung des Lenkrads in die Drehbewegung des mindestens einen gelenkten Rads ein von dem vorgegebenen Übersetzungsfaktor abweichender Übersetzungsfaktor vorgegeben, so dass bei einer weiteren Lenkbewegung der festgestellten Abweichung automatisch entgegengewirkt wird. Wird bei der Prüfung beispielsweise festgestellt, dass der erfasste Absolutwert des Lenkwinkels kleiner ist, als bei dem erfassten Absolutwert der Drehstellung des Lenkrads vorgesehen, kann bei einer nachfolgenden Verkleinerung des Lenkwinkels ein kleinerer Übersetzungsfaktor vorgegeben werden, so dass sich der Lenkwinkel beim Drehen des Lenkrads in die entsprechende Richtung weniger stark verkleinert als gemäß dem üblichen Übersetzungsfaktor. Wird hingegen der Lenkwinkel auf Grundlage einer Drehung des Lenkrads weiter vergrößert, kann ein größerer Übersetzungsfaktor vorgegeben werden, so dass der Lenkwinkel stärker vergrößert wird, als bei Verwendung des üblichen Übersetzungsfaktors. Durch diese Maßnahmen wird der erfassten Abweichung entgegengewirkt, d.h. der Lenkwinkel wird bei weiteren Drehbewegungen des Lenkrads dahingehend verändert, dass Lenkwinkel und Drehstellung des Lenkrads sich automatisch der gemäß der Zuordnung vorgesehenen relativen Stellung annähern.

Ein besonderer Vorteil des Verfahrens ist, dass es automatisch während der Fahrt des Flurförderzeugs ausgeführt wird. Eine Unterbrechung des Betriebs ist daher nicht notwendig. Dadurch wird fortlaufend, beispielsweise während einer gesamten Arbeitsschicht, eine optimale Abstimmung des Lenkwinkels und der Drehstellung des Lenkrads aufeinander sichergestellt. Der Bediener findet so zu jedem Zeitpunkt die gewohnte und für reibungsloses Arbeiten optimale relative Lenkradstellung vor.

Bei dem aus dem Stand der Technik bekannten Verfahren mit einer vorgeschalteten Ausrichtphase kann es hingegen während des Betriebs zu stärkeren Abweichungen kommen, die erst beim Neustart des Flurförderzeugs in einer Ausrichtphase korrigiert werden. Das erfindungsgemäße Verfahren trägt daher zum reibungslosen und sicheren Betrieb des Flurförderzeugs bei.

Grundsätzlich können die Absolutwerte der Drehstellung des Lenkrads und der Drehstellung des gelenkten Rads während der Fahrt des Flurförderzeugs von beliebigen Sensoren erfasst werden. Dabei ist es grundsätzlich möglich, die Absolutwerte mit Hilfe von hierfür geeigneten Sensoren kontinuierlich zu erfassen. Das erfindungsgemäße Verfahren kann jedoch auch mit einfacheren Sensoren ausgeführt werden, die eine Erfassung von Absolutwerten nur in wenigen vorgegebenen Drehstellungen oder nur in einer einzigen vorgegebenen Drehstellung ermöglichen. Beispielsweise kann ein Sensor für die Erfassung eines Absolutwertes in ein Drehlager integriert sein und lediglich bei einem Null-Durchgang ansprechen. Eine Erfassung nur ausgewählter Absolutwerte führt jedoch dazu, dass der Absolutwert für die Drehstellung des Lenkrads und der Absolutwert für die Drehstellung des gelenkten Rads in der Regel nicht gleichzeitig erfolgt. Es ist daher gemäß einer Ausgestaltung vorgesehen, beim Prüfen, ob die erfassten Absolutwerte entsprechend der Zuordnung miteinander in Beziehung stehen, eine zeitlich zwischen dem Erfassen der beiden Absolutwerte erfasste Drehbewegung des Lenkrads und/oder des mindestens einen gelenkten Rads zu berücksichtigen. Diese Berücksichtigung kann beispielsweise innerhalb einer Steuerung des Flurförderzeugs erfolgen, aber auch in einen der Sensoren integriert sein. Beispielsweise kann für das Erfassen der Drehbewegung des Lenkrads und der absoluten Drehstellung des Lenkrads ein einziger Sensor verwendet werden, der sowohl eine relative Änderung der Drehstellung als auch bestimmte vorgegebene absolute Werte erfassen kann. Durch die genannte Ausgestaltung kann eine Abweichung der relativen Stellung von Lenkrad und gelenktem Rad auch dann erfolgen, wenn nur in bestimmten Fahrsituationen Absolutwerte für die jeweiligen Drehstellungen erfasst werden können.

In einer Ausgestaltung erfolgt das Prüfen, ob die erfassten Absolutwerte entsprechend der Zuordnung miteinander in Beziehung stehen, durch Ermitteln eines Sollwerts für die Drehstellung des Lenkrads, der dem erfassten Absolutwert der Drehstellung des gelenkten Rads zugeordnet ist, und Ermitteln einer Differenz zwischen dem ermittelten Sollwert für die Drehstellung des Lenkrads und dem erfassten Absolutwert der Drehstellung des Lenkrads. Mit anderen Worten wird auf Grundlage des erfassten Absolutwerts der Drehstellung des gelenkten Rads und der erwünschten Zuordnung ermittelt, in welcher Drehstellung sich das Lenkrad befinden sollte, und die Abweichung hiervon wird durch Differenzbildung bestimmt. Dies ermöglicht eine einfache Weiterverarbeitung und Bestimmung des abweichenden Übersetzungsfaktors auf Grundlage der ermittelten Differenz.

In einer Ausgestaltung wird der abweichende Übersetzungsfaktor in Abhängigkeit von der ermittelten Differenz und der Drehrichtung der erfassten Drehbewegung des Lenkrads ermittelt. Die Berücksichtigung der genannten Größen ermöglicht eine einfache Festlegung des abweichenden Übersetzungsfaktors. Die Abweichung des abweichenden Übersetzungsfaktors von dem vorgegebenen Übersetzungsfaktor kann quantitativ ermittelt werden, wobei große ermittelte Differenzen zu größeren Anpassungen des Übersetzungsfaktors führen. Dadurch wird eine schnelle Beseitigung der ermittelten Abweichung bewirkt. Es können jedoch auch nur wenige diskrete Werte für den abweichenden Übersetzungsfaktor vorgegeben werden, beispielsweise ein erster Wert, der kleiner ist als der vorgegebene Übersetzungsfaktor und ein zweiter Wert, der größer ist als der vorgegebene Übersetzungsfaktor. Die diskreten Werte können unterschiedlich stark vom vorgegebenen, normalerweise verwendeten Übersetzungsfaktor abweichen. Beispielsweise kann der erste Wert für den Übersetzungsfaktor um 5 % kleiner gewählt sein, als der vorgegebene Übersetzungsfaktor, und der zweite Wert für den abweichenden Übersetzungsfaktor kann um nur 4 % größer gewählt werden, als der vorgegebene Übersetzungsfaktor. Es ist sogar möglich, nur einen einzigen abweichenden Übersetzungsfaktor zu verwenden, der beispielsweise kleiner ist als der vorgegebene Übersetzungsfaktor. Durch geeignete Wahl der verwendeten abweichenden Übersetzungsfaktoren kann beispielsweise eine Korrektur durch langsamer als gewohnt erfolgende Lenkbewegungen gegenüber einer Korrektur durch schneller als gewohnt erfolgende Lenkbewegungen bevorzugt werden.

Gemäß einer Ausgestaltung erfolgt das Erfassen des Absolutwerts der Drehstellung des Lenkrads und/oder des mindestens einen gelenkten Rads kontinuierlich. Voraussetzung hierfür sind, wie bereits erläutert, geeignete Sensoren. Der Vorteil ist, dass eine fortlaufende Kontrolle der relativen Drehstellungen erfolgen kann.

In einer Ausgestaltung unterscheidet sich der abweichende Übersetzungsfaktor um weniger als 20 % von dem vorgegebenen Übersetzungsfaktor. Bevorzugt kann sich der abweichende Übersetzungsfaktor auch um weniger als 10 % oder um weniger als 5 % von dem vorgegebenen Übersetzungsfaktor unterscheiden. Durch eine relativ geringfügige Abweichung des Übersetzungsfaktors vom vorgegebenen Übersetzungsfaktor wird eine weitgehend unmerkliche Korrektur erreicht. Der Lenkwinkel folgt den über das Lenkrad eingegebenen Benutzervorgaben sehr ähnlich wie Verwendung des üblichen vorgegebenen Übersetzungsfaktors. Dennoch wird einer festgestellten Abweichung in der gewünschten Weise entgegengewirkt, so dass in der Regel bereits nach wenigen Lenkbewegungen zuvor festgestellte Abweichungen vollständig korrigiert sind.

In einer Ausgestaltung nimmt der vorgegebene Übersetzungsfaktor unabhängig von einer festgestellten Abweichung in Abhängigkeit von der Drehstellung des mindestens einen gelenkten Rads unterschiedliche Werte an, insbesondere kleinere Werte um eine Nulllage herum. Dies entspricht einer nicht linearen Zuordnung. Beispielsweise kann ein besonders feinfühliges Lenken bei geringen Lenkwinkeln begünstigt werden. Entsprechend können vorwiegend bei langsamer Fahrt auszuführende starke Lenkbewegungen mit einer geringeren Drehung des Lenkrads bewirkt werden. Bei einem derartigen, progressiven Lenkverhalten wird die Abweichung relativ zu der dann geltenden Zuordnung, die den unterschiedlichen Übersetzungsfaktor berücksichtigt, ermittelt.

In einer Ausgestaltung kann ein Benutzer die Zuordnung zwischen den Drehstellungen des mindestens einen gelenkten Rads und den Sollwerten für eine Drehstellung des Lenkrads vorgeben, insbesondere durch Festlegen einer Referenzstellung des Lenkrads, die einer Nulllage des mindestens einen gelenkten Rads entspricht. Insbesondere bei Lenkrädern mit einem Knauf haben beispielsweise Linksund Rechtshänder unterschiedliche Präferenzen für die Neutralstellung des Lenkrads. Dies kann bei dem erfindungsgemäßen Verfahren einfach berücksichtigt werden. Beispielsweise ist es möglich, die beim Inbetriebnehmen des Flurförderzeugs vorhandene Lenkradstellung als Referenzstellung zu definieren, oder eine solche Referenzstellung durch einen Tastendruck einzustellen. Bei der Erfindung bleibt eine so getroffene Wahl durch die automatische Korrektur von Abweichungen während des Betriebs erhalten.

In einer Ausgestaltung erfolgt vor dem Ausführen des Verfahrens ein automatisches Ausrichten der Drehstellung des Lenkrads und/oder der Drehstellung des mindestens einen gelenkten Rads. Es kann also, wie aus dem Stand der Technik bekannt, dem Betrieb des Flurförderzeugs eine Ausrichtphase vorangestellt werden. Dies ist bei der Erfindung jedoch nicht zwingend erforderlich, weil vorhandene Abweichungen unabhängig von einer vorgeschalteten Ausrichtphase auch im Betrieb des Flurförderzeugs automatisch korrigiert werden.

Die oben angegebene Aufgabe wird ebenfalls gelöst durch das Flurförderzeug mit den Merkmalen des Anspruchs 10. Vorteilhafte Ausgestaltungen sind in den sich anschließenden Unteransprüchen angegeben.

Das erfindungsgemäße Flurförderzeug hat
- ein Lenkrad,
- einen elektrischen Lenkantrieb,
- mindestens ein gelenktes Rad,
- einen Sensor zur Erfassung einer Drehbewegung des Lenkrads,
- einen Sensor zur Erfassung eines Absolutwertes einer Drehstellung des Lenkrads während der Fahrt des Flurförderzeugs,
- einen Sensor zur Erfassung eines Absolutwerts einer Drehstellung des mindestens einen gelenkten Rads während der Fahrt des Flurförderzeugs, und
- eine Steuerung, die so ausgebildet ist, dass sie den elektrischen Lenkantrieb nach Maßgabe eines vorgegebenen Übersetzungsfaktors ansteuert und eine erfasste Drehbewegung des Lenkrads in eine Drehbewegung des mindestens einen gelenkten Rads umsetzt, wobei
- in der Steuerung eine Zuordnung hinterlegt ist, die jeder Drehstellung des mindestens einen gelenkten Rads einen Sollwert für eine Drehstellung des Lenkrads zuordnet,
- die Steuerung dazu ausgebildet ist, zu prüfen, ob ein von dem Sensor zur Erfassung eines Absolutwerts einer Drehstellung des Lenkrads erfasster Absolutwert und ein von dem Sensor zur Erfassung eines Absolutwerts einer Drehstellung des mindestens einen gelenkten Rads erfasster Absolutwert entsprechend der Zuordnung miteinander in Beziehung stehen, und
- die Steuerung dazu ausgebildet ist, falls beim Prüfen, ob die erfassten Absolutwerte entsprechend der Zuordnung miteinander in Beziehung stehen, eine Abweichung festgestellt wird, einen von dem vorgegebenen Übersetzungsfaktor abweichenden Übersetzungsfaktor für die Umsetzung der erfassten Drehbewegung des Lenkrads in die Drehbewegung des mindestens einen gelenkten Rads vorzugeben, so dass bei einer weiteren Lenkbewegung der ermittelten Abweichung automatisch entgegengewirkt wird.

Hinsichtlich der Merkmale des Flurförderzeugs und der besonderen Vorteile wird auf die vorstehenden Erläuterungen der korrespondierenden Verfahrensmerkmale verwiesen. Der Sensor zur Erfassung einer Drehbewegung des Lenkrads und der Sensor zur Erfassung eines Absolutwerts einer Drehstellung des Lenkrads während der Fahrt des Flurförderzeugs können ein einziger Sensor sein, der beispielsweise in ein Drehlager des Lenkrads integriert sein kann. Die Zuordnung kann in der Steuerung in Form einer Tabelle oder einer mathematischen Funktion oder einer sonstigen Vorschrift hinterlegt sein, die die vorgesehene Prüfung ermöglicht. Die genannte besondere Ausbildung der Steuerung kann im Wesentlichen in Form von Software realisiert sein, die auf einer Steuerung des Flurförderzeugs läuft.

Bei dem Flurförderzeug kann es sich um ein Hochhub- oder Niederhubflurförderzeug, einen Gegengewichts- oder Schubmaststapler handeln. Das Flurförderzeug kann einen Fahrersitz aufweisen, von dem aus ein Fahrer das Lenkrad einfach ergreifen kann. Das Lenkrad kann einen Knauf aufweisen, der große Drehwinkel auch bei Ergreifen des Lenkrads mit nur einer Hand am Knauf ermöglicht.

In einer Ausgestaltung sind der Sensor zum Erfassen eines Absolutwerts der Drehstellung des Lenkrads und/oder der Sensor zum Erfassen eines Absolutwerts der Drehstellung des mindestens einen gelenkten Rads analoge Sensoren, die auf eine Positionsänderung einer spiralförmigen Nocke ansprechen. Beispielsweise können hierfür Abstandssensoren, die den Abstand von einer Fläche der spiralförmigen Nocke erfassen, verwendet werden. Die analogen Sensoren setzen den gemessenen Abstand bevorzugt in eine Stromstärke oder eine Spannung um, die am Ausgang des Sensors zur Verfügung gestellt wird. Die analogen Sensoren können eine lineare Kennlinie aufweisen, so dass die Ausgangsgröße linear von der Drehstellung abhängt. Der oder die Abstandssensoren können den Abstand zu der Fläche der spiral-förmigen Nocke berührungslos erfassen oder mit Hilfe eines mechanischen Fühlers, der an der Fläche der spiralförmigen Nocke anliegt und sich entsprechend einer Steigung der spiralförmigen Nocke verlagert, wobei die Verlagerung von dem Sensor erfasst wird.

In einer Ausgestaltung weist die spiralförmige Nocke eine axiale und/oder radiale Steigung auf. Bei einer axialen Steigung verlagert sich eine dem Sensor zugeordnete Fläche der Nocke bezogen auf die Drehrichtung in axialer Richtung, d.h. beispielsweise parallel zur Achse des Lenkrads. Bei einer radialen Steigung verlagert sich die Fläche entsprechend in Radialrichtung.

In einer Ausgestaltung weist das Flurförderzeug eine Einrichtung zum Vorgeben mindestens eines Parameters der Zuordnung, insbesondere einer Referenzstellung des Lenkrads, die einer Nulllage des mindestens einen gelenkten Rads entspricht, auf.

Die Erfindung wird nachfolgend anhand von in Figuren dargestellten Ausführungsbeispielen näher erläutert. Es zeigen:
- Fig. 1: ein erfindungsgemäßes Flurförderzeug in einer perspektivischen Ansicht,
- Fig. 2: das Flurförderzeug aus Fig. 1 in einer schematischen, vereinfachten Darstellung in einer Ansicht von unten,
- Fig. 3: eine schematische Ansicht zum Aufbau der elektrischen Lenkung des Flurförderzeugs aus Fig. 1,
- Fig. 4: das Lenkrad des Flurförderzeugs aus Fig. 1,
- Fig. 5: ein Diagramm zur Zuordnung der Drehstellungen des Lenkrads zu Drehstellungen des mindestens einen gelenkten Rads,
- Fig. 6: eine schematische Darstellung eines Sensors mit einer spiralförmigen Nocke mit axialer Steigung,
- Fig. 7: eine schematische Darstellung eines Sensors mit einer spiralförmigen Nocke mit radialer Steigung,
- Fig. 8: ein Flussdiagramm zum erfindungsgemäßen Verfahren.

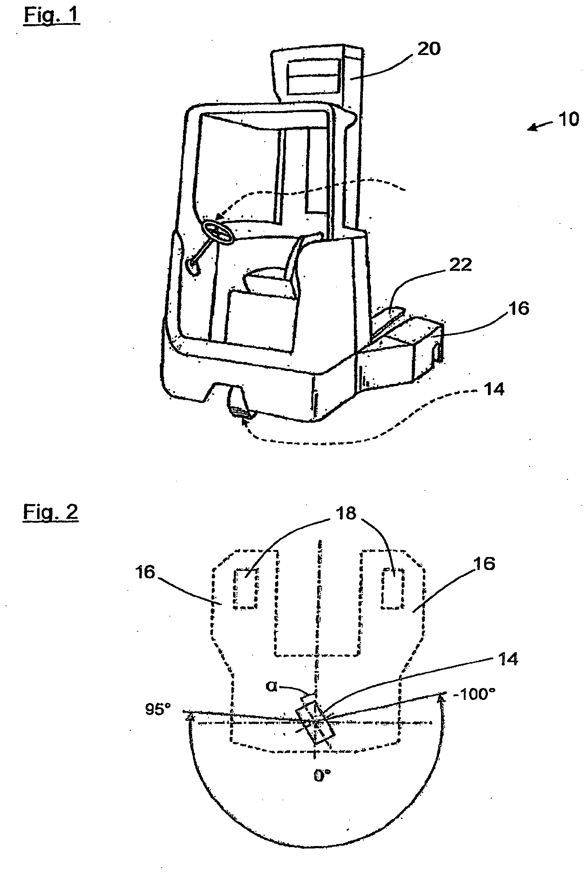

Fig. 1 zeigt ein Flurförderzeug 10 mit einem Lenkrad 12 und einem gelenkten Rad 14. Das Flurförderzeug hat weiterhin zwei parallel beabstandete Radarme 16, an deren vorderen Enden jeweils ein Lastrad 18 angeordnet ist. Weiterhin hat das Flurförderzeug 10 ein Hubgerüst 20 mit einem daran geführten Lasttragmittel 22, sowie einen Fahrersitz 24.

Fig. 2 zeigt schematisch die Definition der Drehstellung α des mindestens einen gelenkten Rads 14. Die Drehstellung α kann auch als Lenkwinkel bezeichnet werden. Sie wird relativ zu einer Längsachse des Flurförderzeugs gemessen. Bei Geradeausfahrt beträgt der Wert der Drehstellung α = 0°. Insgesamt wird ein Wertebereich von -100° bis 95° überstrichen.

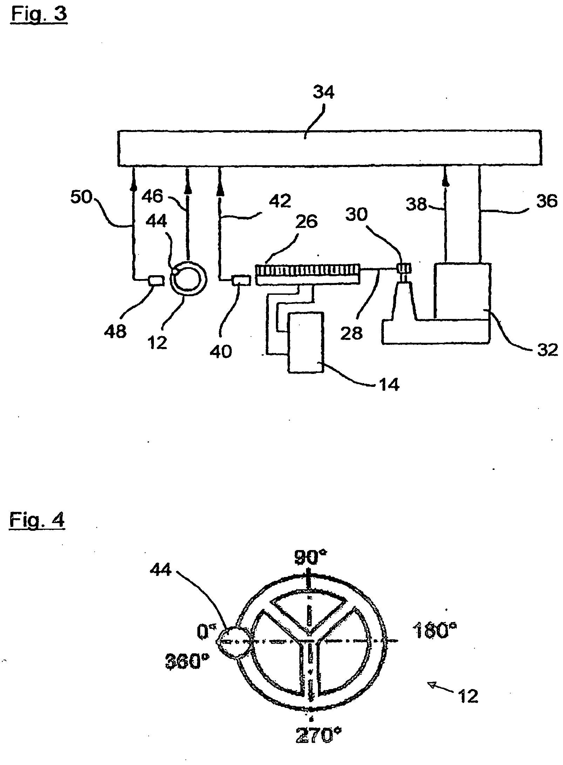

Fig. 3 zeigt schematisch, dass das mindestens eine gelenkte Rad 14 lenkbar an einem Drehschemel 26 gelagert ist. Der Drehschemel 26 weist ein Kettenrad auf, das über eine Kette 28 mit einem Ritzel 30 von einem Lenkantriebsmotor 32, gegebenenfalls über ein zusätzliches Getriebe, angetrieben ist.

Der Lenkantriebsmotor 32 wird von einer Steuerung 34 über eine beispielsweise dreiphasige Stromleitung 36 angesteuert. Im Beispiel ist der Lenkantriebsmotor 32 mit einem Sensorlager (nicht dargestellt) ausgestattet, das über eine weitere Leitung 38 Informationen über die Umdrehungen des Lenkantriebsmotors 32 an die Steuerung 34 übermittelt.

Ein weiterer Sensor 40 erfasst einen Absolutwert der Drehstellung α des mindestens einen gelenkten Rads 14 und übermittelt diesen über eine Leitung 42 an die Steuerung 34.

Ebenfalls in der Fig. 3 angedeutet ist ein Lenkrad 12 mit einem Knauf 44. Das Lenkrad 12 weist ebenfalls ein Sensorlager (nicht dargestellt) auf, das Informationen über eine Drehbewegung des Lenkrads über die Leitung 46 an die Steuerung 34 übermittelt. Ein weiterer Sensor 48 erfasst einen Absolutwert der Drehstellung α des Lenkrads 12 und übermittelt diesen über eine weitere Leitung 50 an die Steuerung 34.

Fig. 4 veranschaulicht anhand eines Lenkrads 12 mit einem Knauf 44 die Definition der Drehstellung ϕ des Lenkrads 12. Bei einer als 0° definierten Stellung befindet sich der Knauf 44 links, bei einer Drehstellung ϕ von 90° befindet sich der Knauf 44 oben, usw.

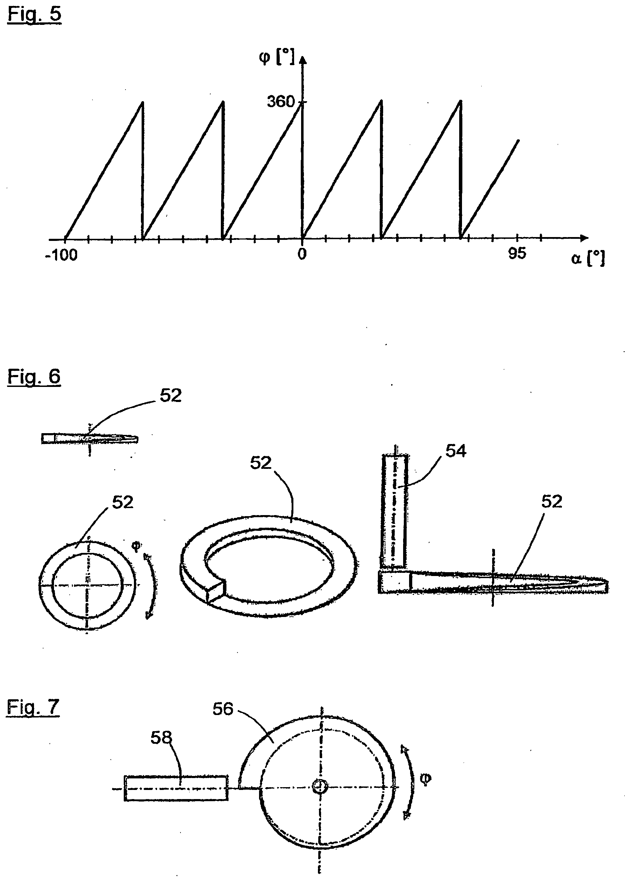

Fig. 5 zeigt eine Zuordnung von Sollwerten für die Drehstellung ϕ zu den möglichen Drehstellungen α des mindestens einen gelenkten Rads 14. Der Wertebereich für die Drehstellung α überstreicht Werte von -100° bis +95°. Zugeordnet sind etwas weniger als sechs volle Umdrehungen des Lenkrads 12. Der Lenkwinkelbereich zwischen -100° und 0° entspricht im Beispiel drei vollen Umdrehungen des Lenkrads 12, entsprechend einem Übersetzungsverhältnis i von 3 x 360°/100° = 10,8. Gebräuchlich sind auch Übersetzungsverhältnisse im Bereich von 4 bis 6, insbesondere zum Beispiel von 5,5.

Wie Fig. 5 zeigt, ist jedem Wert der Drehstellung α genau ein Sollwert für die Drehstellung ϕ zugeordnet. Umgekehrt ist die Zuordnung jedoch nicht eindeutig, einem bestimmten Wert der Drehstellung ϕ des Lenkrads entsprechen mehrere zugehörige Drehstellungen α des gelenkten Rads 14.

Fig. 6 zeigt oben links eine spiralförmige Nocke in einer vereinfachten Ansicht von der Seite und, darunter, von oben. Die Nocke 52 rotiert gemeinsam mit dem Lenkrad 12 um eine in der Ansicht von oben senkrecht zur Zeichenebene verlaufende Drehachse. Die Drehstellung der Nocke 52 ist daher unmittelbar mit der Drehstellung ϕ des Lenkrads 12 verknüpft. In der in der Mitte der Fig. 6 dargestellten perspektivischen Ansicht lässt sich die spiralförmige Ausgestaltung der Nocke 52 am besten erkennen. Die gezeigte Nocke 52 weist eine axiale Steigung auf. In der Fig. 6 rechts dargestellt ist das Zusammenwirken der Nocke 52 mit einem Sensor 54, der so angeordnet ist, dass seine aktive Fläche der spiralförmigen Fläche der Nocke 52 zugewandt ist. Auf diese Weise kann die Drehstellung der Nocke 52 berührungslos erfasst werden.

Fig. 7 zeigt als weiteres Beispiel eine ebenfalls spiralförmige Nocke 56 mit radialer Steigung. Auch diese Nocke 56 rotiert gemeinsam mit einem Lenkrad 12 (oder gemeinsam mit einem gelenkten Rad 14) und ist somit unmittelbar mit der Drehstellung ϕ des Lenkrads 12 verknüpft. Ein Sensor 58 ist so angeordnet, dass seine aktive Fläche den Abstand zur spiralförmigen Fläche der Nocke 56 berührungslos messen und somit Rückschlüsse auf die Drehstellung ϕ der Nocke 56 geben kann.

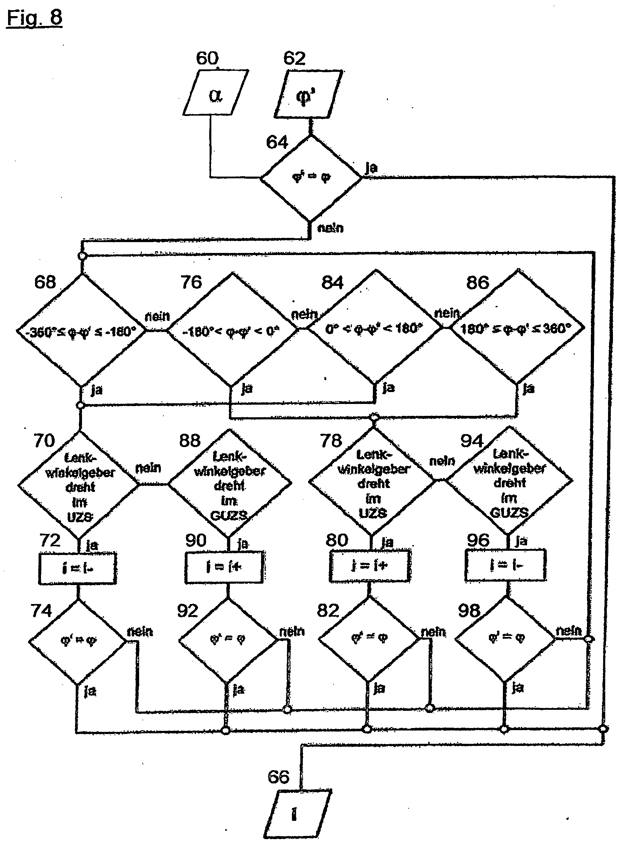

Fig. 8 zeigt ein Flussdiagramm zum erfindungsgemäßen Verfahren. Das Verfahren kann vollständig während der Fahrt des Flurförderzeugs ausgeführt werden, d.h. während des regulären Betriebs des Flurförderzeugs.

Das Verfahren schließt bei 60 und 62 das Erfassen eines Absolutwerts für die Drehstellung α des mindestens einen gelenkten Rads 14 und eines Absolutwerts ϕ' für die in Drehstellung ϕ des Lenkrads 12 ein. Das Erfassen dieser Schritte kann kontinuierlich oder nur bei Durchlaufen bestimmter Werte in sich zufällig ergebenden Zeitabständen erfolgen.

Bei 64 erfolgt eine Überprüfung, ob der sich gemäß der in der Fig. 5 veranschaulichten Zuordnung ergebende Sollwert für die Drehstellung ϕ, der dem bei 60 erfassten Absolutwert für die Drehstellung α des gelenkten Rads 12 entspricht, mit dem erfassten Absolutwert ϕ' übereinstimmt (ϕ' gleich (ϕ?). Stimmen die Werte überein, befinden sich die erfassten Absolutwerte α und ϕ' im Einklang mit der Zuordnung, und als Übersetzungsfaktor wird bei 66 ein Standardwert, auch als vorgegebener Übersetzungsfaktor i bezeichnet, eingestellt.

Stimmen die beiden Werte nicht überein, d.h. wird eine Abweichung der erfassten Absolutwerte von der Zuordnung festgestellt, wird das Verfahren bei 68 fortgesetzt. Dort wird die Differenz (ϕ - ϕ') zwischen dem Sollwert der Drehstellung ϕ und dem erfassten Absolutwert ϕ' gebildet und überprüft, ob diese im Wertebereich von - 360° bis -180° liegt. Ist dies der Fall, wird bei 70 festgestellt, welche Drehrichtung des Lenkrads vorliegt (Lenkwinkelgeber dreht im Uhrzeigersinn?). Liegt eine Drehung im Uhrzeigersinn vor, wird bei 72 der Übersetzungsfaktor auf einen von dem vorgegebenen Wert abweichenden Übersetzungsfaktor i- gesetzt. Der Wert i-kann beispielsweise um 5 % kleiner sein als der vorgegebene Übersetzungsfaktor i. Durch diese Vorgabe des abweichenden Übersetzungsfaktors wird im weiteren Verlauf der Lenkbewegung der bei 64 festgestellten Abweichung automatisch entgegengewirkt. Bei 74 findet eine Überprüfung statt, ob der erfasste Absolutwert ϕ' nunmehr dem Sollwert für die Drehstellung ϕ entspricht. Ist dies der Fall, findet das Verfahren bei 66 seinen vorläufigen Abschluss.

Ist das Ergebnis im Schritt 68 negativ, wird bei 76 in einem weiteren Schritt überprüft, ob die ermittelte Differenz (ϕ - ϕ') im Wertebereich zwischen -180° und 0° liegt. Ist dies der Fall, geht es bei 76 mit einer Überprüfung weiter, ob das Lenkrad 12 im Uhrzeigersinn gedreht wird (Lenkwinkelgeber dreht im Uhrzeigersinn?). Ist dies der Fall, wird bei 78 der Übersetzungsfaktor auf einen abweichenden Übersetzungsfaktor i+ eingestellt, der beispielsweise um 5 % größer ist als der vorgegebene Übersetzungsfaktor i. Anschließend wird bei 80 überprüft, ob weiterhin eine Abweichung vorhanden ist. Ist dies nicht der Fall, wird der Übersetzungsfaktor bei 66 wieder auf seinen Standardwert gesetzt. Anderenfalls wird das Verfahren erneut mit dem Schritt 68 fortgesetzt.

Ergibt die Überprüfung bei 76, dass die ermittelte Differenz (ϕ - ϕ') nicht im Wertebereich zwischen -180° und 0° liegt, wird bei 84 geprüft, ob die Differenz (ϕ - ϕ') zwischen 0° und 180° liegt. Ist dies der Fall, geht es mit dem bereits erläuterten Schritt 70 weiter. Anderenfalls wird das Verfahren mit dem Schritt 86 fortgesetzt, einer Überprüfung, ob die ermittelte Differenz (ϕ - ϕ') im Bereich zwischen 180° und 360° liegt. Ist dies der Fall, geht das Verfahren mit dem ebenfalls bereits erläuterten Schritt 78 weiter.

Wird im Schritt 70 festgestellt, dass das Lenkrad 12 sich nicht im Uhrzeigersinn dreht, ergibt die weitere Überprüfung bei 88 naturgemäß, dass eine Drehbewegung entgegen dem Uhrzeigersinn (Lenkwinkelgeber dreht im Gegenuhrzeigersinn?) vorliegt. In diesem Fall wird der Übersetzungsfaktor bei 90 auf den größeren Wert i+ gesetzt. Die weitere Überprüfung 92 entspricht dem bereits erläuterten Schritt 74.

Wird im Schritt 78 festgestellt, dass keine Drehbewegung im Uhrzeigersinn vorliegt, ergibt die weitere Prüfung auf eine Drehbewegung im Gegenuhrzeigersinn (Lenkwinkelgeber dreht im Gegenuhrzeigersinn?) bei 94 ein positives Ergebnis, und bei 96 wird als Übersetzungsfaktor der kleinere abweichende Übersetzungsfaktor i-eingestellt. Die sich bei 98 anschließende Überprüfung entspricht dem bereits erläuterten Schritt 74.

Wie bereits erläutert, führt das skizzierte Verfahren zu einer automatischen Korrektur von Abweichungen zwischen der Drehstellung α des mindestens einen gelenkten Rads 12 und der zugehörigen Drehstellung ϕ des Lenkrads 12.

## Patentansprüche

1. Verfahren zum Betreiben einer elektrischen Lenkung eines Flurförderzeugs (10), das ein Lenkrad (12) und mindestens ein gelenktes Rad (14) aufweist, wobei eine Zuordnung existiert, die jeder Drehstellung (α) des mindestens einen gelenkten Rads (14) einen Sollwert für eine Drehstellung (ϕ) des Lenkrads (12) zuordnet, mit den folgenden Schritten:
• Erfassen einer Drehbewegung des Lenkrads (12) des Flurförderzeugs (10),
• Ansteuern eines elektrischen Lenkantriebsmotors (32) für das mindestens eine gelenkte Rad (14) derart, dass die erfasste Drehbewegung des Lenkrads (12) nach Maßgabe eines vorgegebenen Übersetzungsfaktors (i) in eine Drehbewegung des mindestens einen gelenkten Rads (14) umgesetzt wird,
• Erfassen eines Absolutwerts einer Drehstellung (ϕ) des Lenkrads (12) während der Fahrt des Flurförderzeugs (10),
• Erfassen eines Absolutwerts einer Drehstellung (α) des gelenkten Rads (14) während der Fahrt des Flurförderzeugs (10),
• Prüfen, ob die erfassten Absolutwerte entsprechend der Zuordnung miteinander in Beziehung stehen, und, falls hierbei eine Abweichung festgestellt wird, **gekennzeichnet durch** den Schritt:
• Vorgeben eines von dem vorgegebenen Übersetzungsfaktor (i) abweichenden Übersetzungsfaktors (i+, i-) für die Umsetzung der erfassten Drehbewegung des Lenkrads (12) in die Drehbewegung des mindestens einen gelenkten Rads (14) derart, dass bei einer weiteren Lenkbewegung der festgestellten Abweichung automatisch entgegengewirkt wird, wobei, falls beim Prüfen festgestellt wird, dass der erfasste Absolutwert der Drehstellung (α) des gelenkten Rads (14) kleiner ist, als bei dem erfassten Absolutwert der Drehstellung (ϕ) des Lenkrads (12) vorgesehen,
• ein kleinerer Übersetzungsfaktor (i-) vorgegeben wird, so dass sich der Absolutwert der Drehstellung (α) des gelenkten Rads (14) weniger stark verkleinert als bei Verwendung des vorgegebenen Übersetzungsfaktors (i), falls die weitere Lenkbewegung zu einer Verkleinerung des Absolutwerts der Drehstellung (α) des gelenkten Rads (14) führt, und
• ein größerer Übersetzungsfaktor (i+) vorgegeben wird, so dass sich der Absolutwert der Drehstellung (α) des gelenkten Rads (14) stärker vergrößert, als bei Verwendung des vorgegebenen Übersetzungsfaktors (i), falls die weitere Lenkbewegung zu einer Vergrößerung des Absolutwerts der Drehstellung (α) des gelenkten Rads (14) führt.

2. Verfahren nach Anspruch 1, **dadurch gekennzeichnet, dass** beim Prüfen, ob die erfassten Absolutwerte entsprechend der Zuordnung miteinander in Beziehung stehen, eine zeitlich zwischen dem Erfassen der beiden Absolutwerte erfasste Drehbewegung des Lenkrads (12) und/oder des mindestens einen gelenkten Rads (14) berücksichtigt wird.

3. Verfahren nach Anspruch 1 oder 2, **dadurch gekennzeichnet, dass** das Prüfen, ob die erfassten Absolutwerte entsprechend der Zuordnung miteinander in Beziehung stehen, durch Ermitteln eines Sollwerts für die Drehstellung (ϕ) des Lenkrads (12), der dem erfassten Absolutwert der Drehstellung (α) des gelenkten Rads zugeordnet ist, und Ermitteln einer Differenz zwischen dem ermittelten Sollwert für die Drehstellung des Lenkrads (12) und dem erfassten Absolutwert der Drehstellung des Lenkrads (12) erfolgt.

4. Verfahren nach Anspruch 3, **dadurch gekennzeichnet, dass** der abweichende Übersetzungsfaktor (i+, i-) in Abhängigkeit von der ermittelten Differenz und der Drehrichtung der erfassten Drehbewegung des Lenkrads (12) ermittelt wird.

5. Verfahren nach einem der Ansprüche 1 bis 4, **dadurch gekennzeichnet, dass** das Erfassen des Absolutwerts der Drehstellung (ϕ) des Lenkrads (12) und/oder des mindestens einen gelenkten Rads (14) kontinuierlich erfolgt.

6. Verfahren nach einem der Ansprüche 1 bis 5, **dadurch gekennzeichnet, dass** sich der abweichende Übersetzungsfaktor (i+, i-) um weniger als 20 % von dem vorgegebenen Übersetzungsfaktor (i) unterscheidet.

7. Verfahren nach einem der Ansprüche 1 bis 6, **dadurch gekennzeichnet, dass** der vorgegebene Übersetzungsfaktor (i) unabhängig von einer festgestellten Abweichung in Abhängigkeit von der Drehstellung (α) des mindestens einen gelenkten Rads (14) unterschiedliche Werte annimmt, insbesondere kleinere Werte um eine Nulllage herum.

8. Verfahren nach einem der Ansprüche 1 bis 7, **dadurch gekennzeichnet, dass** ein Benutzer die Zuordnung zwischen den Drehstellungen (α) des mindestens einen gelenkten Rads (14) und den Sollwerten für eine Drehstellung (ϕ) des Lenkrads (12) vorgeben kann, insbesondere durch Festlegen einer Referenzstellung des Lenkrads (12), die einer Nulllage des mindestens einen gelenkten Rads (14) entspricht.

9. Verfahren nach einem der Ansprüche 1 bis 8, **dadurch gekennzeichnet, dass** vor dem Ausführen des Verfahrens ein automatisches Ausrichten der Drehstellung (ϕ) des Lenkrads (12) und/oder der Drehstellung (α) des mindestens einen gelenkten Rads (14) erfolgt.

10. Flurförderzeug (10) mit
• einem Lenkrad (12),
• einem elektrischen Lenkantriebsmotor (32),
• mindestens einem gelenkten Rad (14),
• einem Sensor zur Erfassung einer Drehbewegung des Lenkrads (12),
• einem Sensor (48) zur Erfassung eines Absolutwerts einer Drehstellung (ϕ) des Lenkrads während der Fahrt des Flurförderzeugs (10),
• einem Sensor (40) zur Erfassung eines Absolutwerts einer Drehstellung (α) des mindestens einen gelenkten Rads (14) während der Fahrt des Flurförderzeugs (10), und
• einer Steuerung (34), die so ausgebildet ist, dass sie den elektrischen Lenkantriebsmotor (32) nach Maßgabe eines vorgegebenen Übersetzungsfaktors (i) ansteuert und eine erfasste Drehbewegung des Lenkrads (12) in eine Drehbewegung des mindestens einen gelenkten Rads (14) umsetzt, wobei
• in der Steuerung (34) eine Zuordnung hinterlegt ist, die jeder Drehstellung (α) des mindestens einen gelenkten Rads (14) einen Sollwert für eine Drehstellung (ϕ) des Lenkrads (12) zuordnet,
• die Steuerung (34) dazu ausgebildet ist, zu prüfen, ob ein von dem Sensor (48) zur Erfassung eines Absolutwerts einer Drehstellung (ζ) des Lenkrads (12) erfasster Absolutwert und ein von dem Sensor (40) zur Erfassung eines Absolutwerts einer Drehstellung (α) des mindestens einen gelenkten Rads (14) erfasster Absolutwert entsprechend der Zuordnung miteinander in Beziehung stehen, und **dadurch gekennzeichnet, dass**
• die Steuerung (34) dazu ausgebildet ist, falls beim Prüfen, ob die erfassten Absolutwerte entsprechend der Zuordnung miteinander in Beziehung stehen, eine Abweichung festgestellt wird, einen von dem vorgegebenen Übersetzungsfaktor (i) abweichenden Übersetzungsfaktor (i+, i-) für die Umsetzung der erfassten Drehbewegung des Lenkrads (12) in die Drehbewegung des mindestens einen gelenkten Rads (14) vorzugeben, so dass bei einer weiteren Lenkbewegung der ermittelten Abweichung automatisch entgegengewirkt wird, wobei
• die Steuerung (34) dazu ausgebildet ist, falls beim Prüfen festgestellt wird, dass der erfasste Absolutwert der Drehstellung (α) des gelenkten Rads (14) kleiner ist, als bei dem erfassten Absolutwert der Drehstellung (ϕ) des Lenkrads (12) vorgesehen, einen kleineren Übersetzungsfaktor (i-) vorzugeben, so dass sich der Absolutwert der Drehstellung (α) des gelenkten Rads (14) weniger stark verkleinert als bei Verwendung des vorgegebenen Übersetzungsfaktors (i), falls die weitere Lenkbewegung zu einer Verkleinerung des Absolutwerts der Drehstellung (α) des gelenkten Rads (14) führt, und
• die Steuerung (34) dazu ausgebildet ist, falls beim Prüfen festgestellt wird, dass der erfasste Absolutwert der Drehstellung (α) des gelenkten Rads (14) kleiner ist, als bei dem erfassten Absolutwert der Drehstellung (ϕ) des Lenkrads (12) vorgesehen, einen größeren Übersetzungsfaktor (i+) vorzugeben, so dass sich der Absolutwert der Drehstellung (α) des gelenkten Rads (14) stärker vergrößert, als bei Verwendung des vorgegebenen Übersetzungsfaktors (i), falls die weitere Lenkbewegung zu einer Vergrößerung des Absolutwerts der Drehstellung (α) des gelenkten Rads (14) führt.

11. Flurförderzeug (10) nach Anspruch 10, **dadurch gekennzeichnet, dass** der Sensor (48) zum Erfassen eines Absolutwerts der Drehstellung (ϕ) des Lenkrads (12) und/oder der Sensor (40) zum Erfassen eines Absolutwerts der Drehstellung (α) des mindestens einen gelenkten Rads (14) analoge Sensoren (54, 58) sind, die auf eine Positionsänderung einer spiralförmigen Nocke (52, 56) ansprechen.

12. Flurförderzeug (10) nach Anspruch 11, **dadurch gekennzeichnet, dass** die spiralförmige Nocke (52, 56) eine axiale und/oder radiale Steigung aufweist.

13. Flurförderzeug (10) nach einem der Ansprüche 10 bis 12, **dadurch gekennzeichnet, dass** das Flurförderzeug (10) eine Einrichtung zum Vorgeben mindestens eines Parameters der Zuordnung, insbesondere einer Referenzstellung des Lenkrads (12), die einer Nulllage des mindestens einen gelenkten Rads (14) entspricht, aufweist.

## Claims

1. A method for operating an electrical steering system of an industrial truck (10) which has a steering wheel (12) and at least one steered wheel (14), wherein there is an assignment which assigns a target value for a rotational position (ϕ) of the steering wheel (12) to each rotational position (α) of the at least one steered wheel (14), having the following steps:
• detecting a rotational movement of the steering wheel (12) of the industrial truck (10),
• actuating an electrical steering drive motor (32) for the at least one steered wheel (14) such that the measured rotational movement of the steering wheel (12) is converted into a rotational movement of the at least one steered wheel (14) according to a predetermined transmission factor (i),
• detecting an absolute value of a rotational position (ϕ) of the steering wheel (12) during travel of the industrial truck (10),
• detecting an absolute value of a rotational position (α) of the steered wheel (14) during travel of the industrial truck (10),
• checking whether the detected absolute values are related to one another according to the assignment, and if a deviation is determined, **characterized by** the step:
• specifying a transmission factor (i+, i-) that differs from the predetermined transmission factor (i) for the conversion of the detected rotational movement of the steering wheel (12) into the rotational movement of the at least one steered wheel (14) such that the determined deviation is automatically counteracted during a further steering movement, whereby, if during checking it is noted that the detected absolute value of the rotational position (α) of the steered wheel (14) is smaller than predetermined for the detected absolute value of the rotational position (ϕ) of the steering wheel (12),
• specifying a smaller transmission factor (i-) such that the absolute value of the rotational position (α) of the steered wheel (14) decreases less than when using the predetermined transmission factor (i), if the further steering movement leads to a decrease of the absolute value of the rotational position (α) of the steered wheel (14), and
• a greater transmission factor (i+) is specified such that the absolute value of the rotational position (α) of the steered wheel (14) increases more than when using the predetermined transmission factor (i), if the further steering movement leads to an increase of the absolute value of the rotational position (α) of the steered wheel (14).

2. The method according to claim 1, **characterized in that** during checking whether the detected absolute values are related to each other according to the assignment a rotational movement of the steering wheel (12) and/or the at least one steered wheel (14) that occurred in the time interval between the detecting of the two absolute values is taken into account.

3. The method according to claim 1 or 2, **characterized in that** the checking whether the detected absolute values relate to each other according to the assignment occurs by determining a target value for the rotational position (ϕ) of the steering wheel (12) that is assigned to the detected absolute value of the rotational position (α) of the steered wheel and by determining a difference between the determined target value for the rotational position of the steering wheel (12) and the detected absolute value of the rotational position of the steering wheel (12).

4. The method according to claim 3, **characterized in that** the differing transmission factor (i+, i-) is determined depending on the determined difference and the direction of rotation of the detected rotational movement of the steering wheel (12).

5. The method according to one of the claims 1 to 4, **characterized in that** the absolute values of the rotational position (ϕ) of the steering wheel (12) and/or the at least one steered wheel (14) are detected continuously.

6. The method according to one of the claims 1 to 5, **characterized in that** the differing transmission factor (i+, i-) differs by less than 20 % from the predetermined transmission factor (i).

7. The method according to one of the claims 1 to 6, **characterized in that** the predetermined transmission factor (i) assumes different values, particularly smaller values around a zero position, depending on the rotational position (α) of the at least one steered wheel (14), independently of a detected deviation.

8. The method according to one of the claims 1 to 7, **characterized in that** a user can specify the assignment between the rotational positions (α) of the at least one steered wheel (14) and the target values for the rotational position (ϕ) of the steering wheel (12), particularly by determining a reference position of the steering wheel (12) which corresponds to a zero position of the at least one steered wheel (14).

9. The method according to one of the claims 1 to 8, **characterized in that** an automatic alignment of the rotational position (ϕ) of the steering wheel (12) and/or the rotational position (α) of the at least one steered wheel (14) occurs before performing the method.

10. An industrial truck (10) having
• a steering wheel (12),
• an electrical steering drive motor (32),
• at least one steered wheel (14),
• a sensor for detecting a rotational movement of the steering wheel (12),
• a sensor (48) for detecting an absolute value of a rotational position (ϕ) of the steering wheel during travel of the industrial truck (10),
• a sensor (40) for detecting an absolute value of a rotational position (α) of the at least one steered wheel (14) during travel of the industrial truck (10), and
• a control (34) that is designed to actuate the electrical steering drive motor (32) according to a predetermined transmission factor (i) and to convert a detected rotational movement of the steering wheel (12) into a rotational movement of the at least one steered wheel (14), wherein
• an assignment is stored in the control (34) that assigns a target value for a rotational position (ϕ) of the steering wheel (12) to each rotational position (α) of the at least one steered wheel (14),
• the control (34) is designed to check whether an absolute value detected by the sensor (48) for detecting an absolute value of a rotational position (ζ) of the steering wheel (12) and an absolute value detected by the sensor (40) for detecting an absolute value of a rotational position (α) of the at least one steered wheel (14) are related to each other according to the assignment, and **characterized in that**
• if a deviation is determined during checking whether the detected absolute values are related to one another according to the assignment, the control (34) is designed to specify a transmission factor (i+,i-) that differs from the predetermined transmission factor (i) for the conversion of the detected rotational movement of the steering wheel (12) into the rotational movement of the at least one steered wheel (14) such that the determined deviation is automatically counteracted during a further steering movement, wherein
• if during checking it is noted that the detected absolute value of the rotational position (α) of the steered wheel (14) is smaller than predetermined for the detected absolute value of the rotational position (ϕ) of the steering wheel (12), the control (34) is designed to specify a smaller transmission factor (i-) such that the absolute value of the rotational position (α) of the steered wheel (14) decreases less than when using the predetermined transmission factor (i), if the further steering movement leads to a decrease of the absolute value of the rotational position (α) of the steered wheel (14), and
• if during checking it is noted that the detected absolute value of the rotational position (α) of the steered wheel (14) is smaller than predetermined for the detected absolute value of the rotational position (ϕ) of the steering wheel (12), the control (34) is designed to specify a greater transmission factor (i+) such that the absolute value of the rotational position (α) of the steered wheel (14) increases more than when using the predetermined transmission factor (i), if the further steering movement leads to an increase of the absolute value of the rotational position (α) of the steered wheel (14).

11. The industrial truck (10) according to claim 10, **characterized in that** the sensor (48) for detecting an absolute value of the rotational position (ϕ) of the steering wheel (12) and/or the sensor (40) for detecting an absolute value of the rotational position (α) of the at least one steered wheel (14) are analog sensors (54, 58) which activate due to a positional change of a spiral-shaped cam (52, 56).

12. The industrial truck (10) according to claim 11, **characterized in that** the spiral-shaped cam (52, 56) has an axial and/or radial incline.

13. The industrial truck (10) according to one of the claims 10 to 12, **characterized in that** the industrial truck (10) has an apparatus for setting at least one parameter of the assignment, particularly a reference position of the steering wheel (12) which corresponds to a zero position of the at least one steered wheel (14).

## Revendications

1. Procédé de fonctionnement d'une direction électrique d'un chariot de manutention (10) qui présente un volant de direction (12) et au moins une roue dirigée (14), avec existence d'une affectation qui, à chaque position de rotation (α) de la roue dirigée (14) au moins au nombre de un, affecte une valeur de consigne pour une position de rotation (ϕ) du volant de direction (12), avec les étapes suivantes :
• détection d'un mouvement de rotation du volant de direction (12) du chariot de manutention (10),
• pilotage d'un moteur d'entraînement de direction électrique (32) pour la roue dirigée (14) au moins au nombre de un de telle sorte que le mouvement de rotation détecté du volant de direction (12) est, en fonction d'un facteur de transmission (i) prédéfini, converti en un mouvement de rotation de la roue dirigée (14) au moins au nombre de un,
• détection d'une valeur absolue d'une position de rotation (ϕ) du volant de direction (12) pendant le trajet du chariot de manutention (10),
• détection d'une valeur absolue d'une position de rotation (α) de la roue dirigée (14) pendant le trajet du chariot de manutention (10),
• vérification destinée à indiquer si les valeurs absolues détectées sont en relation les unes avec les autres conformément à l'affectation et, si une divergence est constatée en l'occurrence, **caractérisé par** l'étape :
• prédéfinition d'un facteur de transmission (i+, i-), qui diverge du facteur de transmission (i) prédéfini, pour la conversion du mouvement de rotation détecté du volant de direction (12) en le mouvement de rotation de la roue dirigée (14) au moins au nombre de un de telle sorte que, lors de la poursuite du mouvement de direction, la divergence constatée est contrecarrée automatiquement, dans lequel, s'il est constaté lors de la vérification que la valeur absolue détectée de la position de rotation (α) de la roue dirigée (14) est inférieure à ce qui est prévu dans le cas de la valeur absolue détectée de la position de rotation (ϕ) du volant de direction (12),
• un facteur de transmission (i-) inférieur est prédéfini de telle sorte que la valeur absolue de la position de rotation (α) de la roue dirigée (14) se réduit moins fortement qu'en cas d'utilisation du facteur de transmission (i) prédéfini, si la poursuite du mouvement de direction conduit à une réduction de la valeur absolue de la position de rotation (α) de la roue dirigée (14), et
• un facteur de transmission (i+) supérieur est prédéfini de telle sorte que la valeur absolue de la position de rotation (α) de la roue dirigée (14) s'accroît plus fortement qu'en cas d'utilisation du facteur de transmission (i) prédéfini, si la poursuite du mouvement de direction conduit à un accroissement de la valeur absolue de la position de rotation (α) de la roue dirigée (14).

2. Procédé selon la revendication 1, **caractérisé en ce que**, lors de la vérification destinée à indiquer si les valeurs absolues détectées sont en relation les unes avec les autres conformément à l'affectation, un mouvement de rotation du volant de direction (12) et/ou de la roue dirigée (14) au moins au nombre de un qui est détecté dans le temps entre la détection des deux valeurs absolues est pris en compte.

3. Procédé selon la revendication 1 ou 2, **caractérisé en ce que** la vérification destinée à indiquer si les valeurs absolues détectées sont en relation les unes avec les autres conformément à l'affectation est effectuée par la détermination d'une valeur de consigne pour la position de rotation (ϕ) du volant de direction (12) qui est affectée à la valeur absolue détectée de la position de rotation (α) de la roue dirigée et par la détermination d'une différence entre la valeur de consigne déterminée pour la position de rotation du volant de direction (12) et la valeur absolue détectée de la position de rotation du volant de direction (12).

4. Procédé selon la revendication 3, **caractérisé en ce que** le facteur de transmission (i+, i-) divergent est déterminé en fonction de la différence déterminée et du sens de rotation du mouvement de rotation détecté du volant de direction (12).

5. Procédé selon une des revendications 1 à 4, **caractérisé en ce que** la détection de la valeur absolue de la position de rotation (ϕ) du volant de direction (12) et/ou de la roue dirigée (14) au moins au nombre de un est effectuée de façon continue.

6. Procédé selon une des revendications 1 à 5, **caractérisé en ce que** le facteur de transmission (i+, i-) divergent diffère de moins de 20 % du facteur de transmission (i) prédéfini.

7. Procédé selon une des revendications 1 à 6, **caractérisé en ce que**, indépendamment d'une divergence constatée, le facteur de transmission (i) prédéfini adopte, en fonction de la position de rotation (α) de la roue dirigée (14) au moins au nombre de un, différentes valeurs, en particulier des valeurs inférieures autour d'une position zéro.

8. Procédé selon une des revendications 1 à 7, **caractérisé en ce qu'**un utilisateur peut prédéfinir l'affectation entre les positions de rotation (α) de la roue dirigée (14) au moins au nombre de un et les valeurs de consigne pour une position de rotation (ϕ) du volant de direction (12), en particulier par la stipulation d'une position de référence du volant de direction (12) qui correspond à une position zéro de la roue dirigée (14) au moins au nombre de un.

9. Procédé selon une des revendications 1 à 8, **caractérisé en ce que**, avant la réalisation du procédé, il est effectué un alignement automatique de la position de rotation (ϕ) du volant de direction (12) et/ou de la position de rotation (α) de la roue dirigée (14) au moins au nombre de un.

10. Chariot de manutention (10), avec
• un volant de direction (12),
• un moteur d'entraînement de direction électrique (32),
• au moins une roue dirigée (14),
• un capteur destiné à la détection d'un mouvement de rotation du volant de direction (12),
• un capteur (48) destiné à la détection d'une valeur absolue d'une position de rotation (ϕ) du volant de direction pendant le trajet du chariot de manutention (10),
• un capteur (40) destiné à la détection d'une valeur absolue d'une position de rotation (α) de la roue dirigée (14) au moins au nombre de un pendant le trajet du chariot de manutention (10), et
• une commande (34) qui est constituée de telle sorte qu'elle pilote le moteur d'entraînement de direction électrique (32) en fonction d'un facteur de transmission (i) prédéfini et convertit un mouvement de rotation détecté du volant de direction (12) en un mouvement de rotation de la roue dirigée (14) au moins au nombre de un, dans lequel
• une affectation est enregistrée dans la commande (34), laquelle affecte à chaque position de rotation (α) de la roue dirigée (14) au moins au nombre de un une valeur de consigne pour une position de rotation (ϕ) du volant de direction (12),
• la commande (34) est constituée pour vérifier si une valeur absolue détectée par le capteur (48) destiné à la détection d'une valeur absolue d'une position de rotation (ζ) du volant de direction (12) et une valeur absolue détectée par le capteur (40) destiné à la détection d'une valeur absolue d'une position de rotation (α) de la roue dirigée (14) au moins au nombre de un sont en relation l'une avec l'autre conformément à l'affectation, et **caractérisé en ce que**
• la commande (34) est constituée pour, si une divergence est constatée lors de la vérification destinée à indiquer si les valeurs absolues détectées sont en relation les unes avec les autres conformément à l'affectation, prédéfinir un facteur de transmission (i+, i-), divergent du facteur de transmission (i) prédéfini, pour la conversion du mouvement de rotation détecté du volant de direction (12) en le mouvement de rotation de la roue dirigée (14) au moins au nombre de un de telle sorte que, lors de la poursuite du mouvement de direction, la divergence déterminée est contrecarrée automatiquement, dans lequel
• la commande (34) est constituée pour, s'il est constaté lors de la vérification que la valeur absolue détectée de la position de rotation (α) de la roue dirigée (14) est inférieure à ce qui est prévu dans le cas de la valeur absolue détectée de la position de rotation (ϕ) du volant de direction (12), prédéfinir un facteur de transmission (i-) inférieur de telle sorte que la valeur absolue de la position de rotation (α) de la roue dirigée (14) se réduit moins fortement qu'en cas d'utilisation du facteur de transmission (i) prédéfini, si la poursuite du mouvement de direction conduit à une réduction de la valeur absolue de la position de rotation (α) de la roue dirigée (14), et
• la commande (34) est constituée pour, s'il est constaté lors de la vérification que la valeur absolue détectée de la position de rotation (α) de la roue dirigée (14) est inférieure à ce qui est prévu dans le cas de la valeur absolue détectée de la position de rotation (ϕ) du volant de direction (12), prédéfinir un facteur de transmission (i+) supérieur de telle sorte que la valeur absolue de la position de rotation (α) de la roue dirigée (14) s'accroît plus fortement qu'en cas d'utilisation du facteur de transmission (i) prédéfini, si la poursuite du mouvement de direction conduit à un accroissement de la valeur absolue de la position de rotation (α) de la roue dirigée (14).

11. Chariot de manutention (10) selon la revendication 10, **caractérisé en ce que** le capteur (48) destiné à la détection d'une valeur absolue de la position de rotation (ϕ) du volant de direction (12) et/ou le capteur (40) destiné à la détection d'une valeur absolue de la position de rotation (α) de la roue dirigée (14) au moins au nombre de un sont des capteurs (54, 58) analogiques qui réagissent à une variation de position d'une came (52, 56) en forme de spirale.

12. Chariot de manutention (10) selon la revendication 11, **caractérisé en ce que** la came (52, 56) en forme de spirale présente une pente axiale et/ou radiale.

13. Chariot de manutention (10) selon une des revendications 10 à 12, **caractérisé en ce que** le chariot de manutention (10) présente un dispositif destiné à la prédéfinition d'au moins un paramètre de l'affectation, en particulier d'une position de référence du volant de direction (12) qui correspond à une position zéro de la roue dirigée (14) au moins au nombre de un.
